# EUROPÄISCHE PATENTANMELDUNG

(11) **EP 0 965 500 A2**
(43) Veröffentlichungstag der Anmeldung: **22.12.1999**
(21) Anmeldenummer: 99109297.4
(22) Anmeldetag: 27.05.1999
(51) Int. Cl.: B60R 21/32

(54) **Airbag-Vorrichtung für ein Kraftfahrzeug sowie Verfahren zur Steuerung derselben**

(30) Priorität: 18.06.1998 DE 19827135
(71) Anmelder: Volkswagen Aktiengesellschaft, 38436 Wolfsburg (DE)
(72) Erfinder: Keinberger, Franz, 38116 Braunschweig (DE)

(57) **Zusammenfassung**

Die Erfindung betrifft eine Airbag-Vorrichtung für ein Kraftfahrzeug, mit einem in Folge einer Sensorauslösung durch eine Fülleinrichtung (3) mit Gas aufblasbaren Gaskissen (2), welches beim Aufblasen in den Fahrgastraum des Kraftfahrzeugs vorschiebbar ist, und mit einer die Fülleinrichtung (3) durch ein Steuersignal (ST) steuernden Steuereinrichtung (4), wobei die von der Fülleinrichtung (3) in das Gaskissen (2) gelieferte Gasmenge in Reaktion auf ein Sensorsignal (S2), das von einem die Vorschubbewegung des Gaskissens erfassenden Abtastmedium geliefert wird, steuerbar ist.

Die Aufgabe wird erfindungsgemäß dadurch gelößt, daß an der sich auf den Insassen zubewegenden Seite (2') des Gaskissens (2) mindestens ein auf einer lokale Druckänderung ansprechendes, als Abtastmedium fungierendes Sensorelement (10) angeordnet ist, durch welches das die sensierte Druckänderung charakterisierende Sensorsignal (S2) erzeugbar ist, welches zu der die Fülleinrichtung (3) steuernden Steuereinrichtung (4) leitbar ist.

## Beschreibung

Die Erfindung betrifft eine Airbag-Vorrichtung für ein Kraftfahrzeug, mit einem in Folge einer Sensorauslösung durch eine Fülleinrichtung mit Gas aufblasbaren Gaskissen, welches beim Aufblasen in einen Fahrgastraum des Kraftfahrzeugs vorschiebbar ist, und mit einer die Fülleinrichtung durch ein Steuersignal steuernden Steuereinrichtung, wobei die von der Fülleinrichtung in das Gaskissen gelieferte Gasmenge in Reaktion auf ein Sensorsignal, das von einem die Vorschubbewegung des Gaskissens erfassenden Abtastmedium geliefert wird, steuerbar ist, sowie ein Verfahren zur Steuerung derselben.

Eine derartige Airbag-Vorrichtung für ein Kraftfahrzeug ist aus der EP 0 812 741 bekannt. Hierbei ist vorgesehen, daß die Abtasteinrichtung ein mit dem Vorderteil des Gaskissen verbundenes Abtastmedium aufweist, das in einer Art und Weise ausgebildet ist, daß es die Vorschubbewegung des Gaskissens mit ausführt und diese Vorschubbewegung abgetastet werden kann. Das Abtastmedium ist hierbei in Form eines Fadens oder eines Bandes ausgebildet, der oder das an der Innenseite des Vorderteils des Gaskissens befestigt ist. Beim Füllen des Gaskissens folgt dabei der Faden oder das Band dem Vorschub des sich entfaltenden Gaskissens, so daß durch eine Abtastung der Auszugslänge und/oder der Auszugszeit des Bandes oder des Fadens die Vorschubbewegung des Gaskissens erfaßbar ist. Das Gaskissen wird hierbei so lange befüllt, bis während des Vorschubs ein Gegenstand den Vorschub des Gaskissens beim Entfalten behindert. Dies kann beispielsweise ein zu nahe am Gaskissen befindliches Körperteil des Fahrzeuginsassens, beispielsweise dessen Kopf oder Oberkörper, sein, die sich einer derart vorverlagerten Stellung (out-of-position-Stellung) befinden.

Die bekannte Airbag-Vorrichtung erlaubt es zwar prinzipiell, die Vorschubbewegung des sich entfaltenden Gaskissens zu unterbrechen, wenn das Vorderteil des Gaskissens auf ein Hindernis auftrifft. Die bei der bekannten Airbag-Vorrichtung vorgesehene Erfassung der Vorschubbewegung mittels des Fadens oder des Bandes und das vollständige Abschalten der Gaszufuhr beim Auftreffen des Gaskissen-Vorderteils auf ein Hindernis ist jedoch für die bei Unfällen real vorkommenden Konstellationen in nachteiliger Art und Weise nicht ausreichend, um einerseits den Fahrzeuginsassen bei einem Unfall hinreichend zu schützen und andererseits ein zusätzliches Verletzungsrisiko des Fahrzeuginsassens durch den sich entfaltenden Airbag auszuschließen.

Aus der DE-OS 196 10 833 ist ein Verfahren und eine Vorrichtung zum Steuern einer betätigbaren Rückhalteeinrichtung, wie z.B. eines Airbags, bekannt, welche auf diskrete Steuerzonen anspricht. Die Vorrichtung weist Sensoren auf, die mindestens zwei Parameter abfühlen, die eine Insassenrückhaltefunktion des Rückhaltesystems beeinträchtigen können. Diese Sensoren sind hierbei mit einem Controller verbunden, der eine aus der Vielzahl von diskreten Steuerzonen der Rückhalteeinrichtung auswählt. Hierbei ist vorgesehen, daß das die Rückhalteeinrichtung ansteuernde Steuersignal des Controllers unter Berücksichtigung der Parameter Sitzrückenwinkel, Sitzposition, Gurtauszug, Gurtstatus, Insassenposition, Insassengewicht, Temperatur sowie den Signalen eines Zusammenstoß-Sensors, eines Höhen-Sensors und der Fahrzeuggeschwindigkeit erzeugt wird.

Es ist Aufgabe der vorliegenden Erfindung, eine Airbag-Vorrichtung der eingangs genannten Art derart weiterzubilden, daß bei einer vorverlagerten Position des Fahrzeuginsassens dessen Verletzungsgefahr durch den sich entfaltenden Airbag eliminiert oder zumindest reduziert wird, wobei aber eine sichere Rückhaltefunktion gewährleistet sein soll.

Diese Aufgabe wird durch die erfindungsgemäße Vorrichtung dadurch gelöst, daß an der sich auf den Insassen zubewegenden Seite des Gaskissen mindestens ein auf eine lokale Druckänderung ansprechendes, als Abtastmedium fungierendes Sensorelement angeordnet ist, durch welches das die sensierte Druckänderung charakterisierende Sensorsignal erzeugbar ist, welches zu der die Fülleinrichtung steuernden Steuereinrichtung leitbar ist.

Das erfindungsgemäße Verfahren sieht vor, daß eine Druckänderung an der sich auf den Insassen zubewegenden Seite des sich entfaltenden Gaskissens durch mindestens ein an dieser angeordnetes, drucksensitives Sensorelement erfaßt und das diese Druckänderung charakterisierende Sensorsignal erzeugt wird, welches zu der die Fülleinrichtung für das Gaskissen steuernden Steuereinrichtung geleitet wird.

Die erfindungsgemäßen Maßnahmen besitzen den Vorteil, daß sie es ermöglichen, die Entfaltung und die Rückhaltewirkung des Gaskissens der Airbag-Vorrichtung so zu steuern, daß bei einer out-of-position-Situation oder bei einer critical-out-of-position-Situation des Fahrzeuginsassen keine zusätzlichen Verletzungsgefahren desselben durch den sich entfaltenden Airbag entstehen. In vorteilhafter Art und Weise kann die Rückhaltewirkung des Airbags durch eine kontinuierliche, quasi-kontinuierliche oder zu diskreten Zeitpunkten stattfindende Auswertung des Sensorsignals des oder der an der Vorderfront des Gaskissen angeordneten druckempfindlichen Sensoren gesteuert werden.

Eine vorteilhafte Weiterbildung der Erfindung sieht vor, daß eine Vielzahl von über einen definierten Bereich der an der sich auf den Insassen zubewegenden Seite des Gaskissens verteilt angeordneten druckempfindlichen Sensorelementen vorgesehen ist. Eine derartige Maßnahme besitzt den Vorteil, daß hierdurch nicht nur eine lokale Druckänderung, sondern eine Druckverteilung sensierbar ist, die es in vorteilhafter Art und Weise erlaubt, Rückschlüsse auf die Größe, die Lage und ggf. die Form des die Ausbreitung des Gaskissens behinderten Objekts zu ziehen, so daß in vorteilhafter Art und Weise eine verbesserte Positionserkennung erreicht wird.

Eine weitere vorteilhafte Weiterbildung der Erfindung sieht vor, daß der Steuereinrichtung nicht nur das die Auslösung des Gaskissens des Airbags initiierende Signal eines Unfallsensors und das Sensorsignal des an der sich auf den Insassen zubewegenden Seite des Gaskissens befindlichen mindestens einen Sensorelements zugeführt werden, sondern daß weitere, den Unfallverlauf charakterisierende statische und/oder dynamische Parameter in den Steuervorgang einbezogen werden. Durch diese Maßnahmen wird in vorteilhafter Art und Weise eine Nachführung des Füllzustands des Gaskissens ermöglicht.

Eine weitere vorteilhafte Weiterbildung der Erfindung sieht vor, daß ein Beschleunigungs-/Verzögerungssensor im Fahrzeug angeordnet ist, dessen Meßsignal einer Steuereinrichtung zugeführt wird. Diese Maßnahme besitzt den Vorteil, daß aus dem vom Sensorelement der erfindungsgemäßen Airbag-Vorrichtung gelieferten Sensorsignal und dem vom Beschleunigungs-/Verzögerungssensor gelieferten Meßsignale derjenige Anteil der Insassenmasse dynamisch bestimmbar ist, welcher vom Gaskissen der Airbag-Vorrichtung im Kollisionsfall zurückgehalten werden muß. Hierdurch wird in vorteilhafter Art und Weise eine Anpassung des Fülldrucks des Gaskissens der erfindungsgemäßen Airbag-Vorrichtung an das Unfallgeschehen ermöglicht.

Weitere vorteilhafte Weiterbildungen sind Gegenstand der Unteransprüche.

Weitere Einzelheiten und Vorteile der Erfindung sind dem Ausführungsbeispiel zu entnehmen, das im folgenden anhand der Figuren beschrieben wird.

Es zeigen:
- Figur 1: Eine schematische Darstellung eines Ausführungsbeispiels,
- Figur 2: eine Ansicht des Ausführungsbeispiels in Richtung II der Figur 1,
- Figur 3: ein Detail III der Figur 1, und
- Figur 4: ein Blockschaltbild einer Steuerung für das Ausführungsbeispiel.

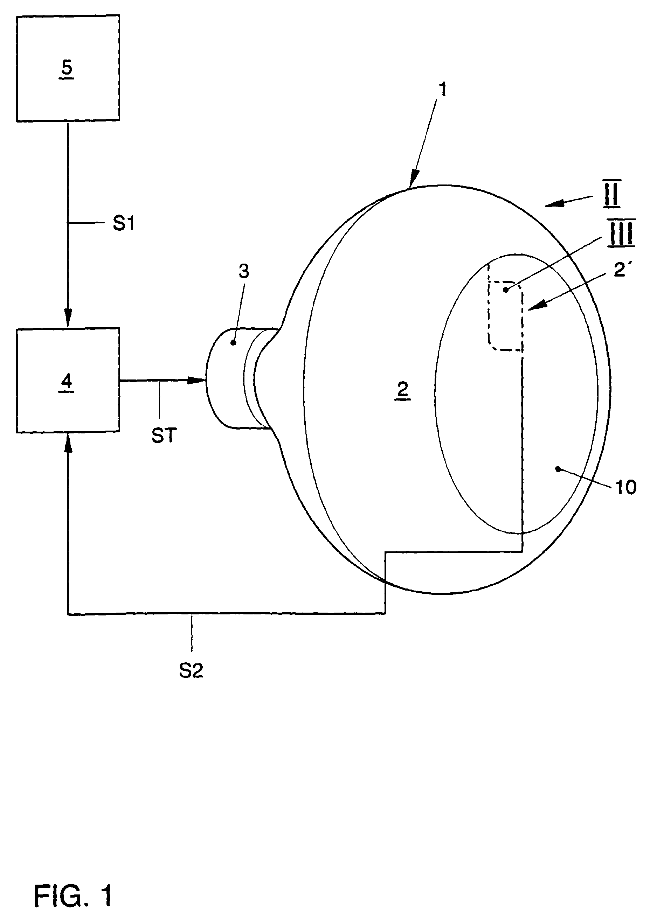

In den Figuren 1-3 ist ein allgemein mit 1 bezeichnetes Ausführungsbeispiel einer Airbag-Vorrichtung für ein Kraftfahrzeug dargestellt, welches sich prinzipiell in ein Gaskissen 2, eine vorzugsweise ein- oder mehrstufige Fülleinrichtung 3 zur Erzeugung eines das Gaskissen 2 füllenden Gases und eine die Fülleinrichtung 3 über ein Steuersignal ST steuernde Steuereinrichtung 4, der Sensorsignale S1 eines Unfallsensors 5 zugeführt werden, gliedert. Eine derartige Airbag-Vorrichtung 1 ist bekannt und muß daher nicht mehr näher erläutert werden.

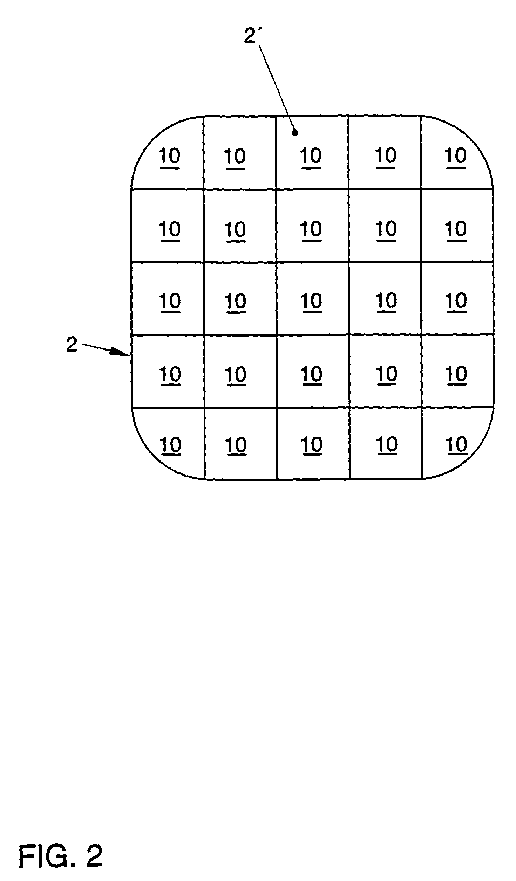

Wie bereits vorstehend erläutert, besteht bei einem durch den Unfallsensor 5 initiierten Aufblasen des Gaskissens 2 der Airbag-Vorrichtung 1 die Gefahr, daß sich ein in einer vorgelagerten Stellung, also in einer out-of-position-Situation (OOP) oder einer critical-out-of-position-Situation (COOP) befindlicher Fahrzeuginsasse durch das sich entfaltende Gaskissen 2 verletzt wird. Um diese Gefahr zu elimieren oder zumindest zu reduzieren, ist bei dem beschriebenen Ausführungsbeispiel in vorteilhafter Art und Weise vorgesehen, daß - wie am besten aus Figur 2 ersichtlich ist - an der sich auf den Insassen zubewegenden Seite des Gaskissens 2 mindestens ein druckempfindliches Sensorelement 10 vorgesehen ist. Stößt das Gaskissen 2 in der Entfaltungsphase auf ein seine Entfaltung beeinträchtigendes Objekt, nämlich den in einer OOP- oder COOP-Situation befindlichen Fahrzeuginsassen; wird ein Teilbereich der sich auf den Insassen zubewegenden Seite 2' des Gaskissens 2 - je nach Größe und Masse dieses Objekts - an der weiteren Ausbreitung gehindert. Die damit verbundene lokale Druckerhöhung wird durch das oder die Sensorelemente 10 sensiert und lokalisiert. Das oder die Sensorelemente 10 erzeugen daraufhin ein Sensorsignal S2, das zur Steuereinrichtung 4 der Airbag-Vorrichtung 1 geleitet wird.

Die Verwendung eines einzigen Sensorelements 10 ist prinzipiell ausreichend, um festzustellen, daß ein Objekt die Entfaltung des Gaskissens 2 behindert. Es wird aber bevorzugt, daß in einem definierten Bereich der sich auf den Insassen zubewegenden Seite 2' des Gaskissens 2 eine Vielzahl von Sensorelementen 10 angeordnet sind, deren Sensorsignale S2 der Steuereinrichtung 4 zugeführt werden. Hierdurch wird in vorteilhafter Art und Weise eine erhöhte Auflösung erzielt, die es dann erlaubt, nicht nur das Vorhandensein eines Objekts, sondern auch dessen Form und/oder Größe zu sensieren. Ebenfalls kann vorgesehen sein, daß anstelle von diskreten Sensorelementen 10 an der sich auf den Insassen zubewegenden Seite des Gaskissens 2 eine Druckfolie oder ein taktiler Sensor angeordnet sind, deren Sensorsignale S2 zur Steuereinrichtung 4 leitbar sind. Es ist auch möglich, daß zumindest in einem Teilbereich der sich auf den Insassen zubewegenden Seite 2' des Gaskissens Drucksensoren aufgedruckt sind.

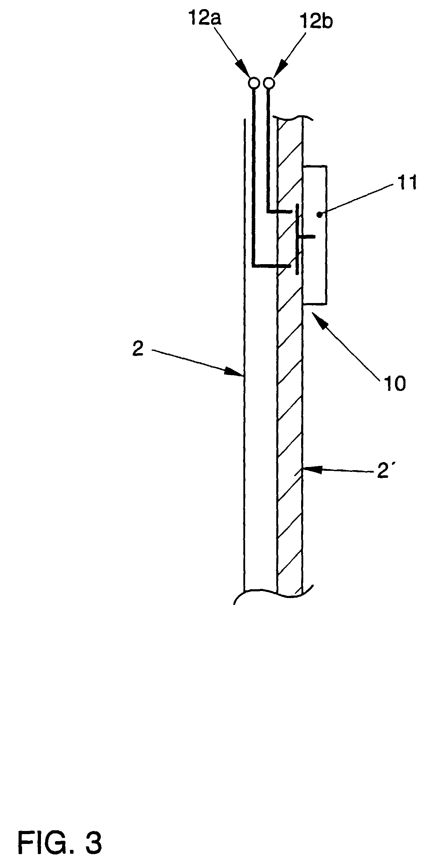

In Figur 3 ist nur eine Ausführungsform eines derartigen Sensorelements 10 dargestellt. Das Gaskissen 2 weist hierbei einen vorzugsweise mehrlagigen Aufbau auf, um das Sensorelement 10 thermisch vom im Innenraum des Gaskissens 2 befindlichen Gas zu isolieren. Das Sensorelement 10 besteht hierbei aus dem eigentlichen Sensor 11, der z.B. ein drucksensitiver Schalter oder ein Piezo-Element ist. Die von diesem Sensor 11 erzeugten Signale werden dann über entsprechende Leitungen 12a, 12b zur Steuereinrichtung 4 geleitet.

Um nun die Zufuhr des von der Fülleinrichtung 3 erzeugten Gases zum Gaskissen 2 entsprechend steuern zu können, wird in einem ersten Schritt die Position des die Ausbreitung des Gaskissens 2 behinderten Objekts ermittelt. Da die Ausbreitungsgeschwindigkeit und das Ausbreitungsverhalten der sich auf den Insassen zubewegenden Seite 2' des Gaskissens 2 bekannt und reproduzierbar sind, kann von der Steuereinrichtung 4 zwischen dem Zündzeitpunkt der Fülleinrichtung 3 und dem von den Sensorelementen 10 sensierten Kontaktzeitpunkt zwischen der sich auf den Insassen zubewegenden Seite 2' des Gaskissens 2 und dem Objekt eine Abstandsbeziehung hergestellt werden, so daß von der Steuereinrichtung 4 festgestellt werden kann, ob sich das Objekt in COOP-Bereich, im OOP-Bereich oder im IP (in-position)-Bereich befindet. Typischerweise findet sich ein Objekt im COOP-Bereich, wenn zwischen dem Zündzeitpunkt der Fülleinrichtung 3 und dem Kontaktzeitpunkt eine Zeitspanne von ca. 0-5 ms liegt. Eine Position des Objekts im OOP-Bereich wird dann von der Steuereinrichtung 4 angenommen, wenn die vorgenannte Zeitspanne im Bereich typischerweise zwischen ca. 6 und ca. 12 ms liegt. Bei einer mehr als ca. 12 ms dauernden Zeitspanne geht die Steuereinrichtung 4 in der Regel davon aus, daß sich das Objekt im IP-Bereich befindet.

Stellt die Steuereinrichtung 4 nun fest, daß sich das die Ausbreitung des Gaskissens 2 behindernde Objekt im COOP-, im OOP- oder im IP-Bereich befindet, wird die Fülleinrichtung 3 derart gesteuert, daß eine Verletzung des Fahrzeuginsassen durch das sich entfaltende Gaskissen 2 eliminiert oder zumindest reduziert wird, indem der Zustrom des von der Fülleinrichtung 3 erzeugten Gases zum Gaskissen 2 drastisch reduziert und/oder unterbrochen wird (COOP-Situation), reduziert wird (OOP-Situation) oder unvermindert aufrechterhalten wird (IP-Situation).

Durch die Sensierung eines hinreichend großen Kontakts zwischen der sich auf den Insassen zubewegenden Seite 2' des Gaskissens 2 und dem Objekt während eines einzigen Zeitpunkt ist jedoch in der Regel nicht mit hinreichender Sicherheit festzustellen, ob es sich bei dem sensierten Objekt wirklich um den Fahrzeuginsassen handelt, der sich in einer COOP- oder einer OOP-Situation befindet, in der eine weitere Entfaltung des Gaskissens 2 gestoppt oder zumindest reduziert werden muß, um eine Verletzung des Fahrzeuginsassens durch das sich entfaltende Gaskissen 2 zu vermeiden, oder ob es sich bei dem sensierten Kontakt um einen Kontakt zwischen einem nicht dem Fahrzeuginsassen zuzuordnenden Teil, z.B. eines infolge des Unfalls im Fahrzeuginnenraum herumfliegenden Teiles handelt. Deshalb wird vorzugsweise vorgesehen, daß die zeitliche Entwicklung des Kontakts zwischen der sich auf den Insassen zubewegenden Seite 2' des Gaskissens 2 und dem Objekt registriert wird. Da die Sensorelemente 10 an der Vorderfront 2' des Gaskissens 2 kontinuierlich, quasikontinuierlich oder zu diskreten Zeitpunkten das Sensorsignal S2 liefern, ist die zeitliche Entwicklung des Kontakts zwischen dem Gaskissen 2 und dem Objekt leicht zu erfassen: Wird z.B. von der Steuereinrichtung 4 festgestellt, daß der erste Kontakt zwischen Gaskissen und Objekt in einer Zeitspanne von ca. 0-5 ms nach Zündung der Fülleinrichtung erfolgt, also daß sich das die Ausbreitung des Gaskissens 2 behindernde Objekt im COOP-Bereich befindet, und hält dieser Kontakt länger als z.B. 3 ms an und/oder vergrößert sich der sensierte Abdruck des Objekts in dieser Zeit, so wird die Annahme, daß sich der Fahrzeuginsasse im COOP-Bereich befindet, bestätigt, so daß dann die Fülleinrichtung 3 entsprechend abgeregelt wird.

Ergibt jedoch die Auswertung des zeitlichen Verlaufs des sensierten Kontakts, daß der Kontaktzustand weniger als z.B. 3 ms anhält und/oder sich der Abdruck in dieser Zeit verkleinert, so kann davon ausgegangen werden, daß die Leistung der Fülleinrichtung 3 beibehalten oder vergrößert werden kann, ohne den Fahrzeuginsassen zu gefährden. Entsprechende Steueralgorithmen sind auch für den OOP-Bereich möglich.

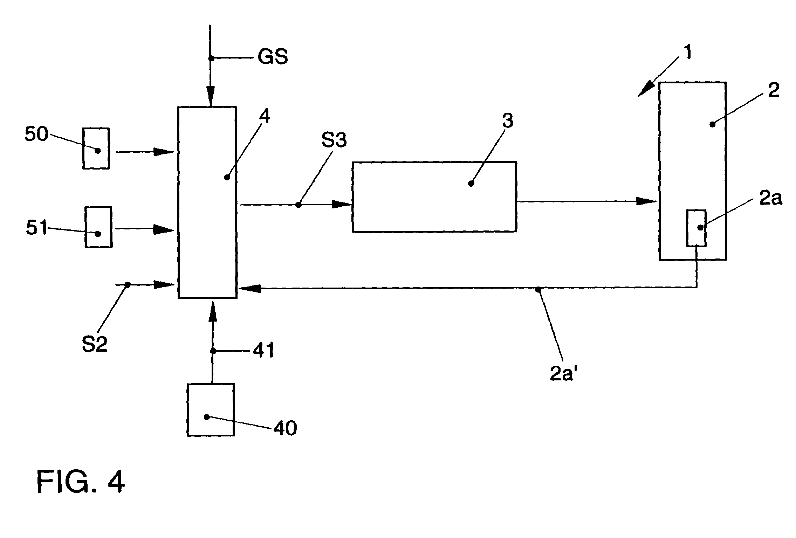

Vorzugsweise ist noch vorgesehen, daß - wie aus Figur 4 ersichtlich ist - in die Steuerung der Fülleinrichtung 3 nicht nur die von den Sensorelementen 10 gelieferten Signale S2 eingehen, sondern daß auch noch weitere statische- und/oder dynamische Parameter in die Steuerung der Fülleinrichtung 3 eingehen. Eine derartige Vorgangsweise besitzt den Vorteil, daß hierdurch z.B. die Unfallschwere, der Gurtstatus, die Insassenmasse und/oder die Größe des dem Fahrzeuginsassen zur Verfügung stehenden Überlebensraums mit berücksichtigt werden. Mit Hilfe von Sensoren 50, die einen bevorstehenden Unfall oder einen Unfall im Frühstadium erkennen, kann schon nach sehr kurzer Zeit eine qualifizierte Aussage über die Unfallschwere getroffen werden. Der Gurtstatus GS ist ebenfalls bekannt. Die Insassenmasse kann leicht durch unter der Sitzfläche des Sitzes angeordnete Meßelemente 51 ermittelt werden. Mit Hilfe eines Algorithmus kann dann aus diesen Parametern ein optimaler Einsatz der Fülleinrichtung 3 berechnet werden, z.B. dadurch, daß dieser Algorithmus durch Vorversuche empirisch ermittelt wird. Vorzugsweise ist dann vorgesehen, daß das von dem Sensorelement 10 gelieferte Sensorsignal S2 während der Entfaltungsphase des Gaskissens 2 einen anderen Kalibrierfaktor aufweist als in die Rückhaltephase, da in dieser letztgenannten Phase die Flächenpressung höher ist als während der Entfaltungsphase, so daß die dann gelieferten Sensorsignale S2 einen höheren Wert besitzen.

Um die Verletzungsgefahr des Insassen durch den sich entfaltenden Airbag möglichst gering zu halten, ist vorzugsweise vorgesehen, daß die Rückhaltefunktion des Gaskissens 2 der Airbag-Vorrichtung 1 derart ausgelegt ist, daß der zur Verfügung stehende Verzögerungsweg des Insassen, also der Überlebensraum, optimal genutzt wird. Hierzu ist vorzugsweise vorgesehen, daß der Innendruck des Gaskissens 2 in Abhängigkeit von einer oder mehreren der im vorstehenden Absatz genannten Einflußgrößen dahingehend gesteuert wird, daß bei geringerer Insassenmasse und/oder geringerer Unfallschwere und/oder bei angelegtem Gurt GS der Innendruck des Gaskissens 2 der Airbag-Vorrichtung 1 nicht so hoch ist wie bei großer Insassenmasse und/oder hoher Unfallschwere und/oder bei nicht angelegtem Gurt. Wie im vorstehenden Absatz ausgeführt, ist hierbei die Insassenmasse ein wesentlicher Parameter. Die beschrieben Airbag-Vorrichtung 1 erlaubt es nun, auf die bis jetzt zur Bestimmung der Insassenmasse unter der Sitzfläche des Sitzes angeordneten Meßelemente 51 zu verzichten und die vom Airbag zurückzuhaltenende anteilige Insassenmasse direkt über das Sensorsignal S2 des Sensorelements 10 zu berechnen. Hierzu ist vorgesehen, daß im Kraftfahrzeug ein Beschleunigungs-/Verzögerungssensor 40 (siehe Figur 4) angeordnet ist, welcher die Beschleunigung/Verzögerung des Kraftfahrzeugs zumindest zum Unfallzeitpunkt mißt. Da durch das Ausgangssignal S2 des Sensorelements 10 die vom Insassen auf das Gaskissen 2 ausgeübte Kraft bekannt ist, kann aus der vom Sensorelement 10 gemessenen Krafteinwirkung des Insassen auf das Gaskissen 2 und der vom Beschleunigungs-/Verzögerungssensor 40 gemessenen Beschleunigung/ Verzögerung die zurückzuhaltende Insassenmasse berechnet werden, welche gleich dem Quotienten von Krafteinwirkung auf das Gaskissen 2 und der Beschleunigung/ Verzögerung des Insassen ist. Eine derartige Vorgangsweise besitzt den Vorteil, daß in die entsprechende Regelung der Fülleinrichtung 3 das Gaskissen 2 nicht die statische, von den im Sitz angeordneten Meßelementen 51 gemessene Insassenmasse, sondern dynamisch die vom Gaskissen 2 aufzufangende Masse eingeht.

Zur Steuerung der Fülleinrichtung 3 für das Gaskissen 2 der Airbag-Vorrichtung 1 ist vorgesehen, daß der zu einem bestimmten Unfallvorgang korelierte Soll-Innendruck in der Steuereinrichtung 4 gespeichert ist. Ein im Gaskissen 2 angeordneten Meßfüller 2a mißt den Ist-Innendruck im Gaskissen 2. Dessen Ausgangssignal 2a' wird zur Steuereinrichtung 4 zurückgeführt, die den vorgegebenen Soll-Wert mit dem gemessenen Ist-Wert vergleicht und dann ein Steuersignal S3 für die Fülleinrichtung 3 erzeugt, so daß die von der Fülleinrichtung 3 erzeugte Gasmenge entsprechend vergrößert oder vermindert wird.

Zusammenfassend ist festzustellen, daß die beschriebene Airbag-Vorrichtung 1 sich dadurch auszeichnet, daß die Entfaltung und Rückhaltewirkung des Gaskissens 2 derart gesteuert kann, daß bei einer COOP- oder bei einer OOP-Situation keine zusätzliche Verletzungsgefahr durch die Entfaltung des Gaskissens 2 entsteht und die Rückhaltefunktion der Airbag-Vorrichtung 1 während des gesamten Unfalles in Abhängigkeit von der Unfallschwere, Insassenmasse und anderen Parametern steuerbar ist.

### BEZUGSZEICHENLISTE

- 1: Airbag-Vorrichtung
- 2: Gaskissen
- 2': Seite
- 3: Fülleinrichtung
- 4: Steuereinrichtung
- 5: Unfallsensor
- 10: Sensorelement
- 11: Sensor
- 12a, 12b: Leitung
- 40: Beschleunigungs-/Verzögerungssensor
- 41: Meßsignal
- 50: Sensor
- 51: Meßelement
- S1: Sensorsignale
- S2: Sensorsignale
- S3: Steuersignal
- ST: Steuersignal
- GS: Gurtstatus

## Patentansprüche

1. Airbag-Vorrichtung für ein Kraftfahrzeug, mit einem in Folge einer Sensorauslösung durch eine Fülleinrichtung (3) mit Gas aufblasbaren Gaskissen (2), welches beim Aufblasen in den Fahrgastraum des Kraftfahrzeugs vorschiebbar ist, und mit einer die Fülleinrichtung (3) durch ein Steuersignal (ST) steuernden Steuereinrichtung (4), wobei die von der Fülleinrichtung (3) in das Gaskissen (2) gelieferte Gasmenge in Reaktion auf ein Sensorsignal (S2), das von einem die Vorschubbewegung des Gaskissens (2) erfassenden Abtastmedium geliefert wird, steuerbar ist, dadurch gekennzeichnet, daß an der sich auf den Insassen zubewegenden Seite (2') des Gaskissens (2) mindestens ein auf einer lokale Druckänderung ansprechendes, als Abtastmedium fungierendes Sensorelement (10) angeordnet ist, durch welches das die sensierte Druckänderung charakterisierende Sensorsignal (S2) erzeugbar ist, welches zu der die Fülleinrichtung (3) steuernden Steuereinrichtung (4) leitbar ist.

2. Airbag-Vorrichtung nach Anspruch 1, dadurch gekennzeichnet, daß in einem definierten Bereich der sich auf den Insassen zubewegenden Seite (2') des Gaskissens eine Vielzahl von Sensorelementen (10) angeordnet ist.

3. Airbag-Vorrichtung nach einem der Ansprüche 1 oder 2, dadurch gekennzeichnet, daß durch das oder die Sensorelemente (10) das Sensorsignal (S2) kontinuierlich, quasi-kontinuierlich oder zu diskreten Zeitpunkten erzeugbar ist.

4. Airbag-Vorrichtung nach einem der vorangehenden Ansprüche, dadurch gekennzeichnet, daß als Sensorelement (10) eine Druckfolie oder ein taktiler Sensor oder ein druckempfindlicher Schalter oder ein Piezoelement verwendet ist, oder daß das Gaskissen (2) mit Drucksensoren bedruckt ist.

5. Airbag-Vorrichtung nach einem der Ansprüche 1 bis 4, dadurch gekennzeichnet, daß mindestens ein Sensorelement (10) einen druckempfindlichen Sensor (11) aufweist, der über Signalleitungen (12a, 12b) mit der Steuereinrichtung (4) verbindbar ist.

6. Airbag-Vorrichtung nach einem der vorangehenden Ansprüche, dadurch gekennzeichnet, daß bei der Steuerung der Fülleinrichtung (3) für das Gaskissen (2) außer dem von einem Unfallsensor (5) gelieferten, die Füllung des Gaskissens (2) initiierenden Signal (S1) und dem Sensorsignal (S2) noch weitere dynamische und/oder statische Parameter berücksichtigbar sind.

7. Airbag-Vorrichtung nach Anspruch 6, dadurch gekennzeichnet, daß der Steuereinrichtung (4) ein Meßsignal (41) eines Beschleunigungs-/Verzögerungssensors (40) zuleitbar ist, und daß durch die Steuereinrichtung (4) aus dem Sensorsignal (S2) des Sensorelements (10) und dem Meßsignal (41) des Beschleunigungs-/Verzögerungsensors (40) die vom Gaskissen (2) zurückzuhaltende Insassenmasse berechenbar ist.

8. Airbag-Vorrichtung nach einem der Ansprüche 6 oder 7, dadurch gekennzeichnet, daß durch die Steuereinrichtung (4) die Fülleinrichtung (3) für das Gaskissen (2) der Airbag-Vorrichtung (1) in Abhängigkeit von der Insassenmasse und/oder der Unfallschwere und/oder des Gurtstatusses steuerbar ist, indem durch einen Gasdrucksensor (2a) der Innendruck im Gaskissen (2) erfaßbar und ein derart ermittelter Ist-Innendruck mit einem in der Steuereinrichtung (4) gespeicherter Soll-Innendruck verglichen und ein die Abweichung zwischen Ist- und Soll-Innendruck minimierendes Steuersignal (S3) erzeugbar ist.

9. Verfahren zur Steuerung einer Airbag-Vorrichtung (1) für ein Kraftfahrzeug, welches ein in Folge einer Sensorauslösung durch eine Fülleinrichtung (3) mit Gas aufblasbares Gaskissens (2) aufweist, welches beim Aufblasen in einen Fahrgastraum des Kraftfahrzeugs vorschiebbar ist, und die eine die Fülleinrichtung (3) über ein Steuersignal (ST) steuernde Steuereinrichtung (4) aufweist, bei dem die von der Fülleinrichtung (3) in das Gaskissen (2) gelieferte Gasmenge in Reaktion auf ein Sensorsignal (S2), das von einem die Vorschubbewegung des Gaskissens (2) erfassenden Abtastmedium geliefert wird, gesteuert wird, dadurch gekennzeichnet, daß eine Druckänderung an der Vorderfront (2') des sich entfaltenden Gaskissens (2) durch mindestens ein an dieser (2') angeordnetes, drucksensitives Sensorelement (10) erfaßt und das diese Druckänderung charakterisierende Sensorsignal (S2) erzeugt wird, welches zu der die Fülleinrichtung (3) für das Gaskissen (2) steuernden Steuereinrichtung (4) geleitet wird.

10. Verfahren nach Anspruch 9, dadurch gekennzeichnet, daß von der Steuereinrichtung (4) das von dem mindestens einen Sensorelement (10) erzeugte Sensorsignal (S2) kontinuierlich, quasi-kontinuierlich oder zu diskreten Zeitpunkten ausgewertet wird.

11. Verfahren nach einem der vorangehenden Ansprüche, dadurch gekennzeichnet, daß aus der Zeitspanne zwischen einem Zündzeitpunkt der Fülleinrichtung (3) und dem sensierten Kontakt zwischen der Vorderfront (2') des Gaskissens (2) und eines Objekts eine Abstandsbeziehung zwischen Gaskissen (2) und Objekt berechnet wird.

12. Verfahren nach Anspruch 11, dadurch gekennzeichnet, daß aus der berechneten Abstandsbeziehung bestimmt wird, ob sich das Objekt im COOP-Bereich, im OOP-Bereich oder im IP-Bereich befindet.

13. Verfahren nach einem der Ansprüche 11 oder 12, dadurch gekennzeichnet, daß die von der Fülleinrichtung (3) erzeugte Gasmenge für das Gaskissen (2) in Abhängigkeit von der Position des Objekts gesteuert wird.

14. Verfahren nach einem der vorangehenden Ansprüche, dadurch gekennzeichnet, daß die Steuerung der Fülleinrichtung (3) in Abhängigkeit vom zeitlichen Verlauf des sensierten Kontakts durchgeführt wird.

15. Verfahren nach einem der vorangehenden Ansprüche, dadurch gekennzeichnet, daß in die Steuerung der Fülleinrichtung (3) außer dem vom Unfallsensor (5) gelieferten Signal (S1) und dem Sensorsignal (S2) weitere statische und/oder dynamische Parameter einbezogen werden.

16. Verfahren nach Anspruch 15, dadurch gekennzeichnet, daß als statische und/oder dynamische Parameter die Unfallschwere, der Gurtstatus, die Insassenmasse oder die Größe des dem Fahrzeuginsassen zur Verfügung stehenden Überlebensraums verwenden werden.

17. Verfahren nach Anspruch 16, dadurch gekennzeichnet, daß die vom Gaskissen (2) der Airbag-Vorrichtung (1) zurückzuhaltende Insassenmasse aus dem Sensorsignal (S2) des Sensorelements (10) und einem Meßsignal (41) eines Beschleunigungs-/Verzögerungssensors (40) berechnet wird.

18. Verfahren nach einem der Ansprüche 16 oder 17, dadurch gekennzeichnet, daß die Fülleinrichtung (3) für das Gaskissen (2) der Airbag-Vorrichtung (1) in Abhängigkeit von der Insassenmasse und/oder der Unfallschwere und/oder des Gurtstatuses (GS) gesteuert wird, indem durch einen Gasdrucksensor (2a) der Innendruck im Gaskissen (2) erfaßt und der derart ermittelte Ist-Innendruck mit einem vorgegebenen Soll-Innendruck verglichen und ein die Abweichung zwischen Ist-Innendruck und Soll-Innendruck minimierendes Steuersignal (S3) erzeugt wird.
